# FASCICULE DE BREVET EUROPEEN

(11) **EP 4 296 157 B1**
(45) Date de publication et mention de la délivrance du brevet: **19.03.2025**
(21) Numéro de dépôt: 23180053.3
(22) Date de dépôt: 19.06.2023
(51) Int. Cl.: B64C 1/14

(54) **AÉRONEF COMPORTANT UN FUSELAGE ET UN PANNEAU FIXÉ DE MANIÈRE AMOVIBLE AU FUSELAGE À L'AIDE DE MOYENS DE FIXATION**
FLUGZEUG MIT EINEM RUMPF UND EINER DURCH EINEN RUMPF LÖSBAR BEFESTIGTEN PLATTE MIT BEFESTIGUNGSMITTELN
AIRCRAFT COMPRISING A FUSELAGE AND A PANEL REMOVABLY SECURED TO THE FUSELAGE USING ATTACHMENT MEANS

(30) Priorité: 21.06.2022 FR 2206106
(43) Date de publication de la demande: 27.12.2023
(73) Titulaire: Airbus Operations, 31060 Toulouse (FR)
(72) Inventeur: MERTES, Anthony, 31060 TOULOUSE (FR); LIEVEN, Patrick, 31060 TOULOUSE (FR)
(74) Mandataire: Cabinet Le Guen Maillet

(56) Documents cités:
- CN-A- 106 672 200
- CN-A- 109 551 830
- FR-A1- 3 089 947
- US-A1- 2015 090 840

## Description

### DOMAINE TECHNIQUE

La présente invention concerne un aéronef comportant un fuselage et un panneau fixé de manière amovible au fuselage à l'aide de moyens de fixation particuliers. L'invention concerne également un procédé d'assemblage du panneau amovible sur le fuselage.

### ÉTAT DE LA TECHNIQUE ANTÉRIEURE

Actuellement, pour stocker le kérosène, un aéronef comporte des réservoirs qui sont classiquement logés dans les ailes. Pour limiter la pollution, il est envisagé de changer de carburant et d'utiliser du dihydrogène liquide ou gazeux. Pour stocker le dihydrogène, il est prévu d'utiliser des réservoirs qui sont logés dans le fuselage de l'aéronef.

Pour assurer la maintenance de ces réservoirs, il est nécessaire de pouvoir y accéder facilement pour éventuellement les retirer en cas de besoins. Il est ainsi nécessaire de prévoir un panneau amovible qui soit facile à mettre en place et à retirer et qui assure également la continuité structurelle du fuselage (voir par exemple le document US 2015/090840 Al).

### EXPOSÉ DE L'INVENTION

Un objet de la présente invention est ainsi de proposer un aéronef comportant un fuselage et au moins un panneau fixé de manière amovible au fuselage à l'aide de moyens de fixation particuliers qui assurent un montage et un démontage faciles du panneau ainsi que la continuité structurelle du fuselage.

À cet effet, est proposé un aéronef comportant :
- un fuselage présentant une ouverture et constitué d'une peau et de poutres fixées à une face intérieure de la peau, où chaque poutre s'interrompt au niveau d'une de ses extrémités au niveau d'un bord de l'ouverture, et où pour chaque poutre qui s'interrompt au niveau d'un bord de l'ouverture, une autre poutre est alignée avec ladite chaque poutre et s'interrompt au niveau du bord opposé de l'ouverture,
- un panneau amovible comportant une peau et des poutres fixées à une face intérieure de la peau, où pour chaque paire de poutres alignées du fuselage et s'interrompant au niveau de l'ouverture, une poutre du panneau amovible s'étend entre les deux poutres de la paire, et chaque extrémité de la poutre du panneau amovible est en regard d'une extrémité d'une poutre de la paire, et
- au niveau de l'extrémité d'au moins une poutre du fuselage en regard avec une extrémité d'une poutre du panneau amovible, des moyens de fixation assurant une fixation amovible entre l'extrémité de ladite poutre du fuselage et l'extrémité de ladite poutre du panneau amovible, où les moyens de fixation comportent :
- une ferrure mâle qui présente un sabot fixé à l'extrémité de la poutre du panneau amovible et un élément mâle solidaire du sabot qui présente une surface de base et trois surfaces latérales qui s'étendent toutes depuis la surface de base dans la même direction et dans des plans différents,
- une ferrure femelle qui présente un sabot fixé à l'extrémité de la poutre du fuselage et un réceptacle solidaire du sabot et dans lequel loge l'élément mâle et qui présente une surface de base en appui contre la surface de base de la ferrure mâle et pour chaque surface latérale de l'élément mâle, une surface latérale est en regard de ladite surface latérale de l'élément mâle,
- pour chaque surface latérale de l'élément mâle, un système d'appui qui est solidaire de la surface latérale du réceptacle correspondant à la surface latérale de l'élément mâle, où le système d'appui comporte une surface d'appui et un système de réglage arrangé pour déplacer ladite surface d'appui et la bloquer en position, et
- un boulon qui comporte une tige filetée et un écrou solidaire de la ferrure femelle, où chaque surface de base présente un alésage pour le passage de la tige filetée, et où le boulon prend les deux surfaces de base en sandwich.

Avec un tel arrangement, le montage et le démontage du panneau amovible sont facilités. Avantageusement, le réceptacle est ouvert vers l'extérieur de l'aéronef.

Avantageusement, l'ouverture est délimitée par des longerons du fuselage, et chaque longeron du fuselage est fixé entre les extrémités des poutres du fuselage et les sabots des ferrures femelles.

Avantageusement, le panneau amovible est délimité par des longerons, et chaque longeron du panneau amovible est fixé entre les extrémités des poutres du panneau amovible et les sabots des ferrures mâles.

Avantageusement, l'aéronef comporte des capots fixés de manière amovible le long des bords de l'ouverture à l'extérieur des moyens de fixation.

Avantageusement, le système de réglage comporte :
- une vis dont la tige filetée est vissée dans la ferrure femelle et dont la tête porte la surface d'appui et où la périphérie de la tête de la vis présente une empreinte,
- une palette de blocage mobile en translation parallèlement à une direction de translation, où la palette de blocage comprend un premier pan avec une contre-empreinte creuse qui reçoit la tête et l'empreinte et qui coopère avec ladite empreinte pour bloquer en rotation la vis, et un deuxième pan avec deux trous oblongs dont les axes sont parallèles à la direction de translation, et
- pour chaque trou oblong, une vis de serrage qui se visse dans la ferrure femelle en prenant le deuxième pan en sandwich.

Avantageusement, le système de réglage comporte des lamelles entre la tête de la vis et la surface latérale.

L'invention propose également un procédé d'assemblage d'un panneau amovible sur un fuselage d'un aéronef selon l'un des modes de réalisation précédents, le procédé comportant :
- une étape d'approche au cours de laquelle le panneau amovible équipé des ferrures mâles est approché du fuselage équipé des ferrures femelles,
- une étape de pré-fixation au cours de laquelle, pour chaque paire d'une ferrure mâle et d'une ferrure femelle, le boulon est vissé mais pas serré afin d'assurer une fixation lâche,
- une étape d'appui au cours de laquelle, pour chaque surface d'appui, le système de réglage correspondant est actionné pour placer ladite surface d'appui contre la surface latérale correspondante de l'élément mâle et pour bloquer ladite surface d'appui dans cette position, et
- une étape de serrage au cours de laquelle chaque boulon est vissé serré.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est une vue de côté d'un aéronef selon l'invention,
[Fig. 2] est une vue en coupe du fuselage de l'aéronef le long de la ligne II-II de la Fig. 1,
[Fig. 3] est une vue en perspective des moyens de fixation selon l'invention,
[Fig. 4] est une vue en perspective d'une ferrure femelle des moyens de fixation de la Fig. 3,
[Fig. 5] est une vue en perspective d'une ferrure mâle des moyens de fixation de la Fig. 3,
[Fig. 6] est une vue des moyens de fixation selon la flèche V de la Fig. 3,
[Fig. 7] est une représentation schématique des moyens de fixation selon l'invention vue selon la flèche V de la Fig. 3,
[Fig. 8] est une représentation schématique des moyens de fixation selon l'invention vue en coupe selon la ligne VIII-VIII de la Fig. 7,
[Fig. 9] est une vue de côté d'un système de réglage selon un mode de réalisation particulier, et
[Fig. 10] est une vue en perspective d'un élément du système de réglage de la Fig. 9.

### EXPOSÉ DÉTAILLÉ DE MODES DE RÉALISATION

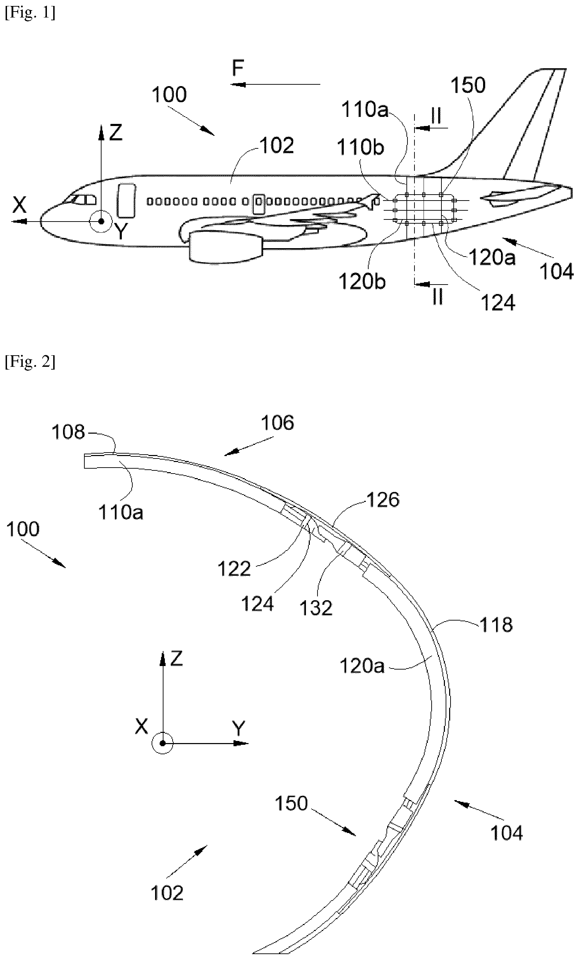

La Fig. 1 montre un aéronef 100 qui comporte un fuselage 102 qui prend globalement une forme cylindrique et un panneau amovible 104 fixé de manière amovible au fuselage 102. Dans le mode de réalisation de l'invention présenté sur la Fig. 1, il y a un seul panneau amovible 104 mais il est possible d'en avoir plusieurs.

La Fig. 2 montre une coupe de l'aéronef 100. À cette fin, le fuselage 102 présente une ouverture 124 qui est ici de forme globalement rectangulaire et qui est obturée par le panneau amovible 104 lorsque celui-ci est en place.

Dans la description qui suit, et par convention, on appelle X la direction longitudinale de l'aéronef 100, on appelle Y la direction transversale qui est horizontale lorsque l'aéronef 100 est au sol, et Z la direction verticale qui est verticale lorsque l'aéronef 100 est au sol, ces trois directions X, Y et Z étant orthogonales entre elles.

Dans la description qui suit, les termes relatifs à une position sont pris en référence à un aéronef 100 en position normale de vol, c'est-à-dire comme il est représenté sur la Fig. 1 et les positions « avant » et « arrière » sont prises par rapport à l'avant et l'arrière de l'aéronef 100 par rapport à sa direction d'avancement lorsque ses moteurs fonctionnent. La flèche F représente la direction d'avancement de l'aéronef 100 en vol.

Le fuselage 102 est constitué de panneaux 106 qui sont généralement de forme arquée autour d'un axe longitudinal X et chaque panneau 106 comprend une peau 108 et des poutres 110a-b fixées à la face intérieure de la peau 108. Dans le mode de réalisation de l'invention présenté à la Fig. 1, il y a des premières poutres 110a où chacune est arrangée dans un plan vertical parallèle au plan YZ et des deuxièmes poutres 110b où chacune s'étend parallèlement à la direction longitudinale X.

Chaque poutre 110a-b du fuselage 102 s'interrompt au niveau d'une de ses extrémités au niveau d'un bord de l'ouverture 124.

Pour chaque première poutre 110a qui s'interrompt au niveau d'un bord de l'ouverture 124, une autre première poutre 110a est alignée, c'est-à-dire dans le même plan vertical, avec ladite première poutre 110a et s'interrompt au niveau du bord opposé de l'ouverture 124.

De la même manière, pour chaque deuxième poutre 110b qui s'interrompt au niveau d'un bord de l'ouverture 124, une autre deuxième poutre 110b est alignée longitudinalement avec ladite deuxième poutre 110b et s'interrompt au niveau du bord opposé de l'ouverture 124. Le panneau amovible 104 comporte une peau 118 et des poutres 120a-b fixées à une face intérieure de la peau 118 du panneau amovible 104.

Pour chaque paire de poutres 110a-b alignées du fuselage 102 et s'interrompant au niveau de l'ouverture 124, le panneau amovible 104 comporte une poutre 120a-b qui s'étend entre les deux poutres 110a-b de la paire. Il y a ainsi une première poutre 120a du panneau amovible 104 qui s'étend entre deux premières poutres 110a du fuselage 102 et une deuxième poutre 120b du panneau amovible 104 qui s'étend entre deux deuxièmes poutres 110b du fuselage 102. Chaque extrémité de la poutre 120a-b du panneau amovible 104 est en regard d'une extrémité d'une poutre 110a-b de la paire.

Au niveau de l'extrémité d'une poutre 110a-b du fuselage 102 en regard d'une extrémité d'une poutre 120a-b du panneau amovible 104, l'aéronef 100 comporte des moyens de fixation 150 qui assurent une fixation amovible entre l'extrémité de ladite poutre 110a-b du fuselage 102 et l'extrémité de ladite poutre 120a-b du panneau amovible 104. La mise en place des moyens de fixation 150 ne s'effectue pas forcément au niveau de l'extrémité de chaque poutre 110a-b du fuselage 102, mais au niveau de l'extrémité d'au moins une poutre 110a-b du fuselage 102, et en fonction de la tenue structurelle, d'autres moyens de fixation 150 sont mis en place sur les extrémités d'autres poutres 110a-b du fuselage 102. Dans le mode de réalisation de l'invention présenté à la Fig. 1, il y a des moyens de fixation 150 au niveau de chaque extrémité d'une poutre 110a-b du fuselage 102 en regard d'une extrémité d'une poutre 120a-b du panneau amovible 104.

Dans le mode de réalisation de l'invention présenté ici, l'ouverture 124 est délimitée horizontalement par des longerons 122 du fuselage 102 qui s'étendent longitudinalement. Il y a ici un longeron 122 en partie haute de l'ouverture 124 et un longeron en partie basse de l'ouverture 124. De la même manière, l'ouverture 124 est délimitée verticalement par des longerons du fuselage 102 qui s'étendent verticalement et il y a ainsi un longeron en partie avant de l'ouverture 124 et un longeron en partie arrière de l'ouverture 124. Les longerons 122 du fuselage 102 sont fixés à la face intérieure de la peau 108 du fuselage 102.

De la même manière ici, le panneau amovible 104 est délimité par des longerons 132 qui s'étendent longitudinalement en haut et en bas du panneau amovible 104 et des longerons qui s'étendent verticalement en partie avant et en partie arrière du panneau amovible 104. Les longerons 132 du panneau amovible 104 sont fixés à la face intérieure de la peau 118 du panneau amovible 104.

Dans le mode de réalisation de l'invention présenté ici, l'extrémité de chaque poutre 110a-b, 120a-b est fixée à un longeron 122, 132 par l'intermédiaire des moyens de fixation 150 comme cela est expliqué ci-dessous.

Un tel arrangement assure ainsi une fixation du panneau amovible 104 et le verrouillage et le déverrouillage des moyens de fixation 150 permettent de fixer et libérer le panneau amovible 104. Il est ainsi aisé de retirer le panneau amovible 104 pour avoir accès à l'intérieur du fuselage 102, par exemple pour assurer la maintenance d'un réservoir de dihydrogène, mais également pour toutes autres opérations de maintenance.

Pour cacher les moyens de fixation 150, l'aéronef 100 présente des capots 126 qui sont fixés le long des bords de l'ouverture 124. Les capots 126 sont fixés de manière amovible par tous moyens appropriés comme par exemple des vis. Le retrait des capots 126 permet d'accéder aux moyens de fixation 150 pour les fixer ou les libérer. Les capots 126 sont fixés à l'extérieur des moyens de fixation 150 pour les cacher.

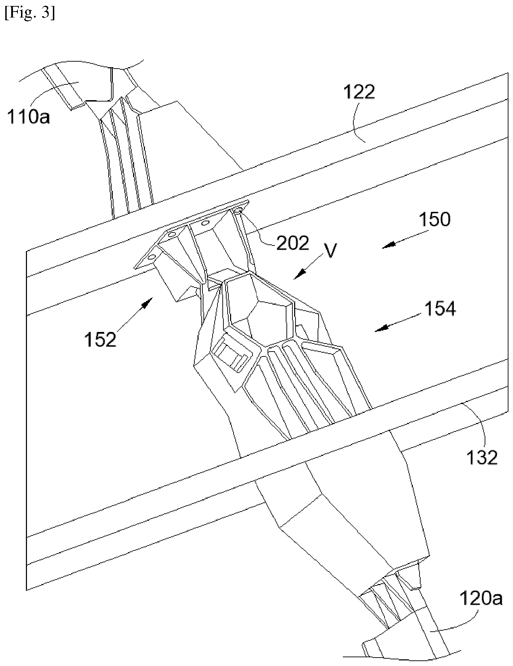

La Fig. 3 montre les moyens de fixation 150 qui sont fixés entre une première poutre 110a du fuselage 102 et une première poutre 120a du panneau amovible 104 à travers les longerons 122 et 132 du fuselage 102 et du panneau amovible 104. Les moyens de fixation 150 comportent une ferrure femelle 152 et une ferrure mâle 154. La description qui suit est plus particulièrement appliquée aux premières poutres 110a et 120a mais elle s'applique de la même manière aux deuxièmes poutres 110b et 120b.

La ferrure femelle 152 est solidaire de l'extrémité de la première poutre 110a du fuselage 102 et la ferrure mâle 154 est solidaire de l'extrémité de la première poutre 120a du panneau amovible 104.

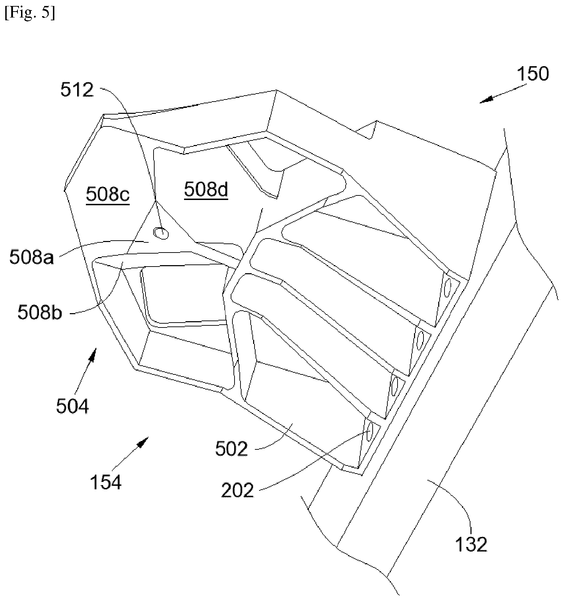

La fixation s'effectue ici par des boulons 202. Il y a ainsi des boulons 202 qui traversent le longerons 122 du fuselage 102 et prennent en sandwich une extrémité de la première poutre 110a du fuselage 102 et la ferrure femelle 152 et des boulons 202 (vus sur la Fig. 5) qui traversent le longeron 132 du panneau amovible 104 et prennent en sandwich une extrémité de la première poutre 120a du panneau amovible 104 et la ferrure mâle 154.

La Fig. 5 montre la ferrure mâle 154 qui présente un sabot 502 fixé ici au longeron 132 du panneau amovible 104, mais d'une manière plus générale à l'extrémité de la première poutre 120a du panneau amovible 104. Le longeron 132 du panneau amovible 104 est ici fixé entre les extrémités des poutres 120a du panneau amovible 104 et les sabots 502 des ferrures mâles 154.

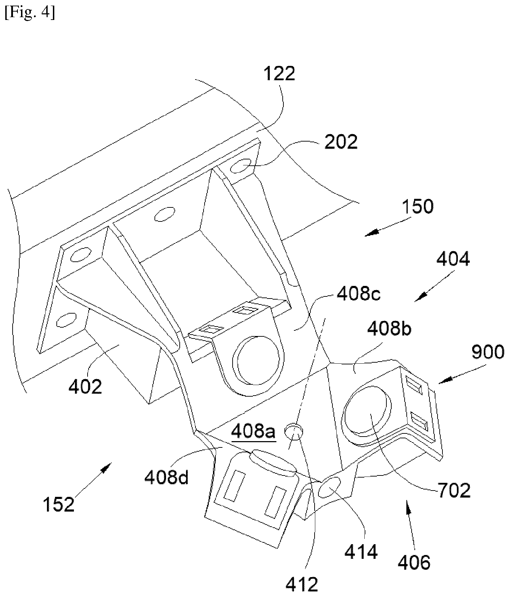

La ferrure mâle 154 comporte également un élément mâle 504 solidaire du sabot 502 de la ferrure mâle 154 et qui s'insère dans un réceptacle (404, Fig. 4) de la ferrure femelle 152. L'élément mâle 504 comporte une surface de base 508a qui est ici globalement tangente par rapport à la forme du fuselage 102.

L'élément mâle 504 comporte également trois surfaces latérales 508b-d qui s'étendent toutes depuis la surface de base 508a dans la même direction, vers l'extérieur du fuselage 102, par rapport à la surface de base 508a afin de créer l'élément mâle 504 délimité par lesdites trois surfaces latérales 508b-d.

Les trois surfaces latérales 508b-d sont toutes orientées dans des plans différents pour assurer le blocage de la ferrure mâle 154 selon trois directions différentes comme cela est expliqué ci-dessous.

Dans le mode de réalisation de l'invention présenté sur la Fig. 5, la surface de base 508a et chaque surface latérale 508b-d forment un triangle et l'élément mâle 504 prend la forme d'un tétraèdre. Chaque surface latérale 508b-d s'étend à partir d'un des bords de la surface de base 508a. La Fig. 4 montre la ferrure femelle 152 qui présente un sabot 402 fixé ici au longeron 122 du fuselage 102 par les boulons 202, mais d'une manière plus générale à l'extrémité de la première poutre 110a du fuselage 102, et un réceptacle 404 solidaire du sabot 402 de la ferrure femelle 152 et dans lequel loge l'élément mâle 504 de la ferrure mâle 154. Le longeron 122 du fuselage 102 est ainsi fixé entre les extrémités des poutres 110a du fuselage 102 et les sabots 402 des ferrures femelles 152.

Le réceptacle 404 comporte une surface de base 408a et pour chaque surface latérale 508b-d de l'élément mâle 504, une surface latérale 408b-d qui est en regard de ladite surface latérale 508b-d de l'élément mâle 504 lorsque le montage est effectué. Les deux surfaces de base 408a et 508a viennent en appui l'une contre l'autre lorsque le montage est effectué. Le réceptacle 404 est ouvert vers l'extérieur de l'aéronef 100. Ainsi, l'introduction de l'élément mâle 504 dans le réceptacle 404 s'effectue simplement en amenant le panneau amovible 104 depuis l'extérieur.

Dans le mode de réalisation de l'invention présenté sur la Fig. 4, la surface de base 408a et chaque surface latérale 408b-d forment un triangle et le réceptacle 404 prend la forme d'un tétraèdre creux. Chaque surface latérale 408b-d s'étend à partir d'un des bords de la surface de base 408a.

Pour chaque surface latérale 508b-d de l'élément mâle 504, les moyens de fixation 150 comportent également un système d'appui 406 qui est solidaire de la surface latérale 408b-d du réceptacle 404 correspondant à la surface latérale 508b-d de l'élément mâle 504 et qui est arrangé pour venir en appui contre ladite surface latérale 508b-d de l'élément mâle 504.

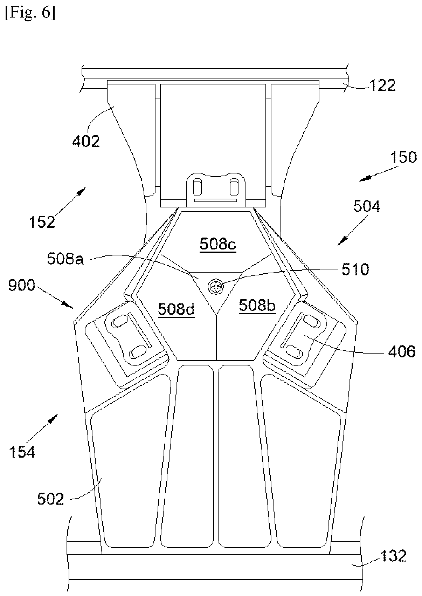

La Fig. 6 montre la ferrure mâle 154 agencée dans la ferrure femelle 152.

Les moyens de fixation 150 comportent également un boulon 510 qui présente une tige filetée et un écrou solidaire de la ferrure femelle 152 où la tige filetée se visse dans l'écrou en traversant la ferrure mâle 154. À cette fin, la surface de base 508a de l'élément mâle 504 présente un premier alésage 512 et la surface de base 408a du réceptacle 404 présente un deuxième alésage 412 sous lequel est fixé un écrou. L'axe du boulon 510 et donc des alésages 412, 512 est perpendiculaire aux surfaces de base 408a et 508a. Une fois vissé, le boulon 510 prend les deux surfaces de base 408a et 508a en sandwich.

Dans le mode de réalisation de l'invention présenté ici, l'écrou est un écrou à manchon qui est logé dans un perçage 414 réalisé sous le réceptacle 404 et dans lequel débouche le deuxième alésage 412.

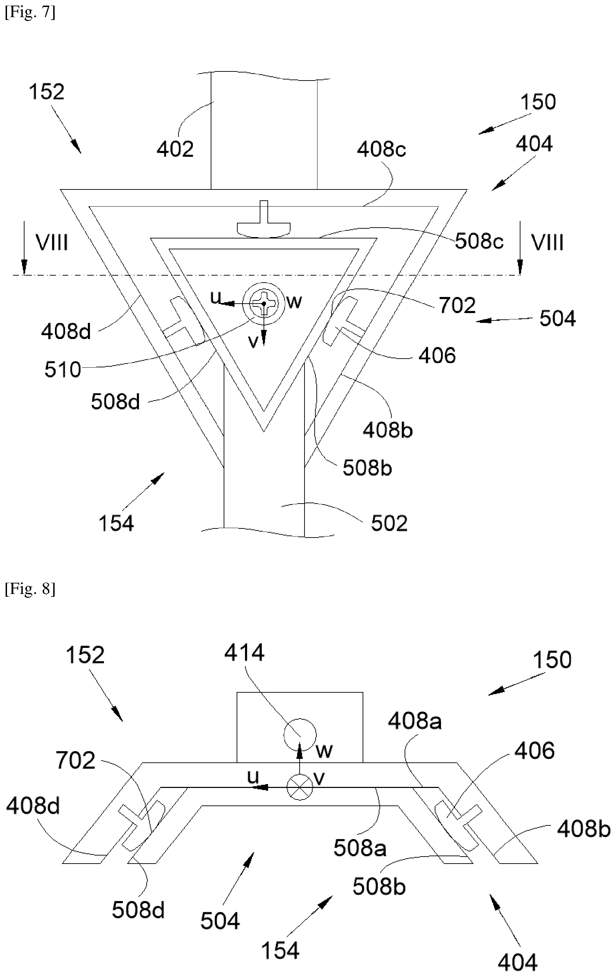

La Fig. 7 et la Fig. 8 montrent schématiquement la mise en place de la ferrure mâle 154 dans la ferrure femelle 152. Sur la Fig. 8, les deux surfaces de base 408a et 508a sont en appui l'une contre l'autre.

Chaque système d'appui 406 comporte une surface d'appui 702 qui est réglée de manière à venir en appui contre la surface latérale 508b-d correspondante de l'élément mâle 504. Comme le montre la Fig. 7, les trois surfaces d'appui 702 sont réparties sur le pourtour de l'élément mâle 504 et du fait des orientations différentes des trois surfaces latérales 508b-d de l'élément mâle 504, les trois surfaces d'appui 702 bloquent l'élément mâle 504.

Ainsi, dans un repère tridimensionnel (u, v, w) lié aux moyens de fixation 150, le contact entre les deux surfaces de base 408a et 508a et le boulon 510 bloque la translation selon w et la rotation autour de v et de u, et les contacts entre les trois surfaces d'appui 702 et les trois surfaces latérales 508b-d de l'élément mâle 504 bloquent les translations selon u et v et la rotation autour de w. Ainsi, tous les degrés de liberté sont bloqués et les charges passent entre la structure du fuselage 102 et la structure du panneau amovible 104 et inversement.

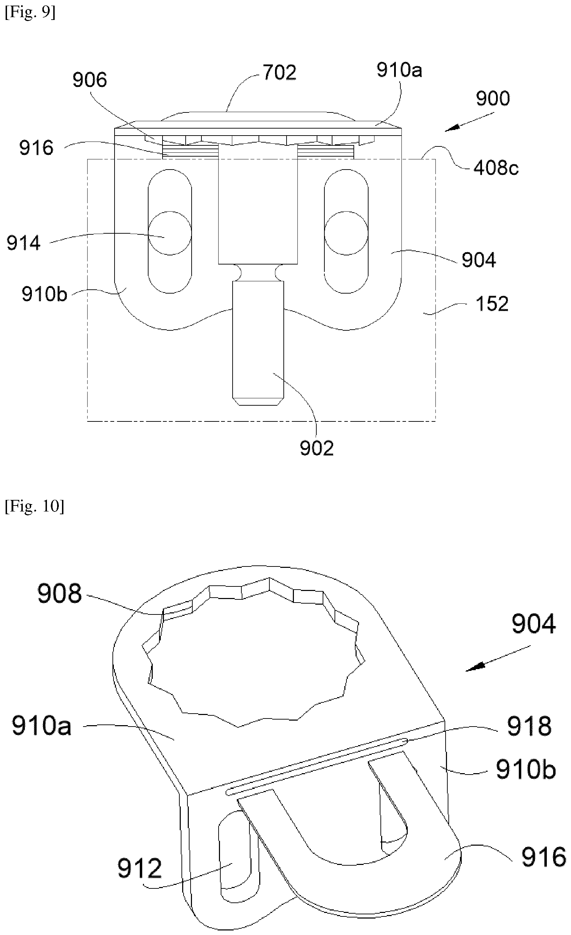

Pour adapter la position de chaque surface d'appui 702 en fonction des variations dimensionnelles et de positionnement de l'élément mâle 504, chaque système d'appui 406 comporte un système de réglage 900 dont un mode de réalisation est représenté aux Figs. 9 et 10, qui assure le déplacement de ladite surface d'appui 702 et son blocage en position. Ainsi, en cas de besoin, la surface d'appui 702 est déplacée pour venir en appui contre la surface latérale 508b-d de l'élément mâle 504 et elle est ensuite bloquée pour rester dans cette position.

Sur la Fig. 9, le système de réglage 900 est celui qui est mis en œuvre sur la ferrure femelle 152 au niveau de la surface latérale 408c. La ferrure femelle 152 est représentée ici en traits fantômes, mais un système de réglage identique est mis au niveau des autres surfaces latérales 408b et 408d.

Le système de réglage 900 comporte une vis 902 dont la tige filetée est vissée dans la ferrure femelle 152, dans l'épaisseur de la surface latérale 408c, et dont la tête porte la surface d'appui 702. Ainsi, par vissage/dévissage de la vis 902, la surface d'appui 702 est amenée contre la surface latérale 508c de l'élément mâle 504. La périphérie de la tête de la vis 902 présente une empreinte 906, ici des dents qui s'étendent radialement autour de la surface d'appui 702. L'axe de la vis 902 est perpendiculaire à la surface latérale 508c de l'élément mâle 504.

Le système de réglage 900 comporte également une palette de blocage 904 qui est représentée en perspective à la Fig. 10 et qui comprend ici deux pans 910a-b. Le premier pan 910a comporte une contre-empreinte 908 creuse qui reçoit la tête et l'empreinte 906 et qui coopère avec ladite empreinte 906 pour bloquer en rotation la vis 902. La contre-empreinte 908 présente ici des dents qui s'étendent radialement et qui coopèrent avec les dents de l'empreinte 906.

La palette de blocage 900 est montée mobile en translation sur la ferrure femelle 152 parallèlement à une direction de translation qui est ici parallèle à l'axe de la vis 902. À cette fin, le deuxième pan 910b comporte deux trous oblongs 912 dont les axes sont parallèles à la direction de translation et le système de réglage 900 comporte pour chaque trou oblong 912, une vis de serrage 914 qui se visse dans la ferrure femelle 152 en prenant le deuxième pan 910b en sandwich.

Préférentiellement, le système de réglage 900 comporte des lamelles 916 qui se glissent et sont serrées entre la tête de la vis 902 et la surface latérale 408c pour mettre en contact la tête de la vis 902 et la ferrure 402 afin de transférer les efforts par contact et non par le biais du filetage de la vis 902. Il peut y avoir au moins une lamelle 916 ou plusieurs de même épaisseur ou de différentes épaisseurs.

Un procédé d'assemblage du panneau amovible 104 sur le fuselage 102 consiste en :
- une étape d'approche au cours de laquelle le panneau amovible 104 équipé des ferrures mâles 154 est approché du fuselage 102 équipé des ferrures femelles 152,
- une étape de pré-fixation au cours de laquelle, pour chaque paire d'une ferrure mâle 154 et d'une ferrure femelle 152, le boulon 510 est vissé mais pas serré afin d'assurer une fixation lâche,
- une étape d'appui au cours de laquelle, pour chaque surface d'appui 702, le système de réglage 900 correspondant est actionné pour placer ladite surface d'appui 702 contre la surface latérale 508b-d correspondante de l'élément mâle 504 et pour bloquer ladite surface d'appui 702 dans cette position, et
- une étape de serrage au cours de laquelle chaque boulon 510 est vissé serré.

Dans le mode de réalisation du système de réglage 900 présenté aux Figs. 9 et 10, l'étape d'appui consiste à :
- desserrer les vis de serrage 914 pour libérer la translation de la palette de blocage 900 parallèlement à la direction de translation,
- dégager l'empreinte 906 et la contre-empreinte 908 de manière à libérer la rotation de la vis 902, ce dégagement s'effectuant par déplacement de la palette de blocage 900 vers la surface latérale 408c,
- régler la vis 902 (vissage/dévissage) pour amener la surface d'appui 702 contre la surface latérale 508c de l'élément mâle 504,
- déplacer en translation la palette de blocage 900, en l'éloignant de la surface latérale 408c, de manière à faire coopérer la contre-empreinte 908 avec l'empreinte 906 et ainsi bloquer la rotation de la vis 902,
- si besoin, glisser des lamelles 916 entre la tête de la vis 902 et la surface latérale 408c pour combler l'espace, et
- serrer les vis de serrage 914 pour bloquer la translation de la palette de blocage 900.

Dans le mode de réalisation de l'invention présenté à la Fig. 10, la mise en place des lamelles 916 s'effectue à travers une fente 918 perpendiculaire à l'axe de la vis 902 que le deuxième pan 910b présente à cet effet. Préférentiellement, les lamelles 916 sont en U pour pouvoir s'enfiler de part et d'autre de la tige filetée de la vis 902.

## Revendications

1. Aéronef (100) comportant :
- un fuselage (102) présentant une ouverture (124) et constitué d'une peau (108) et de poutres (110a-b) fixées à une face intérieure de la peau (108), où chaque poutre (110a-b) s'interrompt au niveau d'une de ses extrémités au niveau d'un bord de l'ouverture (124), et où pour chaque poutre (110a-b) qui s'interrompt au niveau d'un bord de l'ouverture (124), une autre poutre (110a-b) est alignée avec ladite chaque poutre (110a-b) et s'interrompt au niveau du bord opposé de l'ouverture (124),
- un panneau amovible (104) comportant une peau (118) et des poutres (120a-b) fixées à une face intérieure de la peau (118), où pour chaque paire de poutres (110a-b) alignées du fuselage (102) et s'interrompant au niveau de l'ouverture (124), une poutre (120a-b) du panneau amovible (104) s'étend entre les deux poutres (110a-b) de la paire, et chaque extrémité de la poutre (120a-b) du panneau amovible (104) est en regard d'une extrémité d'une poutre (110a-b) de la paire, et
- au niveau de l'extrémité d'au moins une poutre (110a-b) du fuselage (102) en regard avec une extrémité d'une poutre (120a-b) du panneau amovible (104), des moyens de fixation (150) assurant une fixation amovible entre l'extrémité de ladite poutre (110a-b) du fuselage (102) et l'extrémité de ladite poutre (120a-b) du panneau amovible (104),
**caractérisé en ce que** les moyens de fixation (150) comportent :
- une ferrure mâle (154) qui présente un sabot (502) fixé à l'extrémité de la poutre (120a-b) du panneau amovible (104) et un élément mâle (504) solidaire du sabot (502) qui présente une surface de base (508a) et trois surfaces latérales (508b-d) qui s'étendent toutes depuis la surface de base (508a) dans la même direction et dans des plans différents,
- une ferrure femelle (152) qui présente un sabot (402) fixé à l'extrémité de la poutre (110a-b) du fuselage (102) et un réceptacle (404) solidaire du sabot (402) et dans lequel loge l'élément mâle (504) et qui présente une surface de base (408a) en appui contre la surface de base (508a) de la ferrure mâle (154) et pour chaque surface latérale (508b-d) de l'élément mâle (504), une surface latérale (408b-d) est en regard de ladite surface latérale (508b-d) de l'élément mâle (504),
- pour chaque surface latérale (508b-d) de l'élément mâle (504), un système d'appui (406) qui est solidaire de la surface latérale (408b-d) du réceptacle (404) correspondant à la surface latérale (508b-d) de l'élément mâle (504), où le système d'appui (406) comporte une surface d'appui (702) et un système de réglage (900) arrangé pour déplacer ladite surface d'appui (702) et la bloquer en position, et
- un boulon (510) qui comporte une tige filetée et un écrou solidaire de la ferrure femelle (152), où chaque surface de base (408a, 508a) présente un alésage (412, 512) pour le passage de la tige filetée, et où le boulon (510) prend les deux surfaces de base (408a, 508a) en sandwich.

2. Aéronef (100) selon la revendication 1, **caractérisé en ce que** le réceptacle (404) est ouvert vers l'extérieur de l'aéronef (100).

3. Aéronef (100) selon l'une des revendications 1 ou 2, **caractérisé en ce que** l'ouverture (124) est délimitée par des longerons (122) du fuselage (102), **en ce que** chaque longeron (122) du fuselage (102) est fixé entre les extrémités des poutres (110a-b) du fuselage (102) et les sabots (402) des ferrures femelles (152).

4. Aéronef (100) selon l'une des revendications 1 à 3, **caractérisé en ce que** le panneau amovible (104) est délimité par des longerons (132), et **en ce que** chaque longeron (132) du panneau amovible (104) est fixé entre les extrémités des poutres (120a-b) du panneau amovible (104) et les sabots (502) des ferrures mâles (154).

5. Aéronef (100) selon la revendication 1, **caractérisé en ce qu'**il comporte des capots (126) fixés de manière amovible le long des bords de l'ouverture (124) à l'extérieur des moyens de fixation (150).

6. Aéronef (100) selon l'une des revendications 1 à 5, **caractérisé en ce que** le système de réglage (900) comporte :
- une vis (902) dont la tige filetée est vissée dans la ferrure femelle (152) et dont la tête porte la surface d'appui (702) et où la périphérie de la tête de la vis (902) présente une empreinte (906),
- une palette de blocage (904) mobile en translation parallèlement à une direction de translation, où la palette de blocage (904) comprend un premier pan (910a) avec une contre-empreinte (908) creuse qui reçoit la tête et l'empreinte (906) et qui coopère avec ladite empreinte (906) pour bloquer en rotation la vis (902), et un deuxième pan (910b) avec deux trous oblongs (912) dont les axes sont parallèles à la direction de translation, et
- pour chaque trou oblong (912), une vis de serrage (914) qui se visse dans la ferrure femelle (152) en prenant le deuxième pan (910b) en sandwich.

7. Aéronef (100) selon la revendication 6, **caractérisé en ce que** le système de réglage (900) comporte des lamelles (916) entre la tête de la vis (902) et la surface latérale (408c).

8. Procédé d'assemblage d'un panneau amovible (104) sur un fuselage (102) d'un aéronef (100) selon la revendication 1, le procédé comportant :
- une étape d'approche au cours de laquelle le panneau amovible (104) équipé des ferrures mâles (154) est approché du fuselage (102) équipé des ferrures femelles (152),
- une étape de pré-fixation au cours de laquelle, pour chaque paire d'une ferrure mâle (154) et d'une ferrure femelle (152), le boulon (510) est vissé mais pas serré afin d'assurer une fixation lâche,
- une étape d'appui au cours de laquelle, pour chaque surface d'appui (702), le système de réglage (900) correspondant est actionné pour placer ladite surface d'appui (702) contre la surface latérale (508b-d) correspondante de l'élément mâle (504) et pour bloquer ladite surface d'appui (702) dans cette position, et
- une étape de serrage au cours de laquelle chaque boulon (510) est vissé serré.

## Patentansprüche

1. Flugzeug (100), umfassend:
- einen Rumpf (102), der eine Öffnung (124) aufweist und aus einer Haut (108) und aus Spanten (110a-b), die an einer Innenseite der Haut (108) befestigt sind, besteht, wobei jeder Spant (110a-b) an einem seiner Enden an einem Rand der Öffnung (124) unterbrochen ist und wobei bei jedem Spant (110a-b), der an einem Rand der Öffnung (124) unterbrochen ist, ein anderer Spant (110ab) mit dem jeden Spant (110a-b) fluchtet und an dem entgegengesetzten Rand der Öffnung (124) unterbrochen ist,
- eine lösbare Platte (104), die eine Haut (118) und Spanten (120a-b), die an einer Innenseite der Haut (118) befestigt sind, umfasst, wobei sich bei jedem Paar fluchtender und an der Öffnung (124) unterbrochener Spanten (110a-b) des Rumpfes (102) ein Spant (120a-b) der lösbaren Platte (104) zwischen den beiden Spanten (110ab) des Paars erstreckt und jedes Ende des Spants (120ab) der lösbaren Platte (104) einem Ende eines Spants (110a-b) des Paars gegenüberliegt, und
- an dem Ende mindestens eines Spants (110a-b) des Rumpfes (102), das einem Ende eines Spants (120a-b) der lösbaren Platte (104) gegenüberliegt, Befestigungsmittel (150), die eine lösbare Befestigung zwischen dem Ende des Spants (110a-b) des Rumpfes (102) und dem Ende des Spants (120a-b) der lösbaren Platte (104) gewährleisten, **dadurch gekennzeichnet, dass** die Befestigungsmittel (150) umfassen:
- einen Steckbeschlag (154), der einen Schuh (502) aufweist, der an dem Ende des Spants (120a-b) der lösbaren Platte (104) befestigt ist, und ein mit dem Schuh (502) fest verbundenes Steckelement (504), das eine Basisfläche (508a) aufweist und drei seitliche Flächen (508b-d), die sich alle von der Basisfläche (508a) aus in dieselbe Richtung und in unterschiedlichen Ebenen erstrecken,
- einen aufnehmenden Beschlag (152), der einen Schuh (402) aufweist, der an dem Ende des Spants (110a-b) des Rumpfes (102) befestigt ist, und eine Aufnahme (404), die fest mit dem Schuh (402) verbunden ist und in der das Steckelement (504) aufgenommen ist und die eine Basisfläche (408a) aufweist, die in Anlage an der Basisfläche (508a) des Steckbeschlags (154) ist, und für jede seitliche Fläche (508b-d) des Steckelements (504) eine seitliche Fläche (408b-d) gegenüber der seitlichen Fläche (508b-d) des Steckelements (504),
- für jede seitliche Fläche (508b-d) des Steckelements (504) ein Auflagesystem (406), das fest mit der seitlichen Fläche (408b-d) der Aufnahme (404) verbunden ist, die der seitlichen Fläche (508b-d) des Steckelements (504) entspricht, wobei das Auflagesystem (406) eine Auflagefläche (702) umfasst und ein Verstellsystem (900), das dazu ausgestaltet ist, die Auflagefläche (702) zu verlagern und sie in der Position zu sichern, und
- einen Bolzen (510), der einen Gewindestab und eine mit dem aufnehmenden Beschlag (152) fest verbundene Mutter umfasst, wobei jede Basisfläche (408a, 508a) eine Bohrung (412, 512) zum Durchführen des Gewindestabs aufweist und wobei der Bolzen (510) die beiden Basisflächen (408a, 508a) sandwichartig greift.

2. Flugzeug (100) nach Anspruch 1, **dadurch gekennzeichnet, dass** die Aufnahme (404) zur Außenseite des Flugzeugs (100) hin offen ist.

3. Flugzeug (100) nach einem der Ansprüche 1 oder 2, **dadurch gekennzeichnet, dass** die Öffnung (124) durch Stringer (122) des Rumpfes (102) begrenzt wird, und dadurch, dass jeder Stringer (122) des Rumpfes (102) zwischen den Enden der Spanten (110a-b) des Rumpfes (102) und den Schuhen (402) der aufnehmenden Beschläge (152) befestigt ist.

4. Flugzeug (100) nach einem der Ansprüche 1 bis 3, **dadurch gekennzeichnet, dass** die lösbare Platte (104) durch Stringer (132) begrenzt wird, und dadurch, dass jeder Stringer (132) der lösbaren Platte (104) zwischen den Enden der Spanten (120a-b) der lösbaren Platte (104) und den Schuhen (502) der Steckbeschläge (154) befestigt ist.

5. Flugzeug (100) nach Anspruch 1, **dadurch gekennzeichnet, dass** es Abdeckkappen (126) umfasst, die lösbar entlang der Ränder der Öffnung (124) an der Außenseite der Befestigungsmittel (150) befestigt sind.

6. Flugzeug (100) nach einem der Ansprüche 1 bis 5, **dadurch gekennzeichnet, dass** das Verstellsystem (900) umfasst:
- eine Schraube (902), deren Gewindestab in den aufnehmenden Beschlag (152) geschraubt ist und deren Kopf die Auflagefläche (702) trägt und wobei der Umfang des Kopfes der Schraube (902) eine Zahnung (906) aufweist,
- eine Sicherungsfahne (904), die parallel zu einer Translationsrichtung translatorisch beweglich ist, wobei die Sicherungsfahne (904) eine erste Fläche (910a) mit einer hohlen Gegenzahnung (908) umfasst, die den Kopf und die Zahnung (906) aufnimmt und die mit der Zahnung (906) zusammenwirkt, um die Schraube (902) gegen Verdrehen zu sichern, und eine zweite Fläche (910b) mit zwei Langlöchern (912), deren Achsen parallel zu der Translationsrichtung sind, und
- für jedes Langloch (912) eine Spannschraube (914), die in den aufnehmenden Beschlag (152) geschraubt wird, wobei sie die zweite Fläche (910b) sandwichartig greift.

7. Flugzeug (100) nach Anspruch 6, **dadurch gekennzeichnet, dass** das Verstellsystem (900) Plättchen (916) zwischen dem Kopf der Schraube (902) und der seitlichen Fläche (408c) umfasst.

8. Verfahren zur Montage einer lösbaren Platte (104) an einem Rumpf (102) eines Flugzeugs (100) nach Anspruch 1, das Verfahren umfassend:
- einen Schritt des Heranführens, in dessen Verlauf die lösbare Platte (104), die mit den Steckbeschlägen (154) ausgestattet ist, an den Rumpf (102), der mit den aufnehmenden Beschlägen (152) ausgestattet ist, herangeführt wird,
- einen Schritt des Vor-Befestigens, in dessen Verlauf bei jedem Paar aus einem Steckbeschlag (154) und einem aufnehmenden Beschlag (152) der Bolzen (510) eingeschraubt wird, aber nicht festgezogen, um eine lockere Befestigung zu gewährleisten,
- einen Schritt des Auflegens, in dessen Verlauf bei jeder Auflagefläche (702) das entsprechende Verstellsystem (900) betätigt wird, um die Auflagefläche (702) gegen die entsprechende seitliche Fläche (508b-d) des Steckelements (504) zu platzieren und um die Auflagefläche (702) in dieser Position zu sichern, und
- einen Schritt des Festziehens, in dessen Verlauf jeder (510) Bolzen festgezogen eingeschraubt wird.

## Claims

1. Aircraft (100) including:
- a fuselage (102) including an opening (124) and consisting of a skin (108) and beams (110a-b) fixed to an interior face of the skin (108), where each beam (110a-b) is interrupted at one of its ends at an edge of the opening (124) and where for each beam (110a-b) that is interrupted at an edge of the opening (124) another beam (110a-b) is aligned with said beam (110a-b) and interrupted at the opposite edge of the opening (124),
- a removable panel (104) including a skin (118) and beams (120a-b) fixed to an interior face of the skin (118), where for each pair of aligned beams (110a-b) of the fuselage (102) interrupted at the opening (124) a beam (120a-b) of the removable panel (104) extends between the two beams (110a-b) of the pair and each end of the beam (120a-b) of the removable panel (104) faces an end of a beam (110a-b) of the pair, and
- at the end of at least one beam (110a-b) of the fuselage (102) facing an end of a beam (120a-b) of the removable panel (104), fixing means (150) assuring removable fixing between the end of said beam (110a-b) of the fuselage (102) and the end of said beam (120a-b) of the removable panel (104)
**characterized in that** the fixing means (150) include:
- a male fitting (154) that includes a shoe (502) fixed to the end of the beam (120a-b) of the removable panel (104) and a male element (504) fastened to the shoe (502) that includes a base surface (508a) and three lateral surfaces (508b-d) that all extend from the base surface (508a) in the same direction and in different planes,
- a female fitting (152) that includes a shoe (402) fixed to the end of the beam (110a-b) of the fuselage (102) and a receptacle (404) fastened to the shoe (402) and in which the male element (504) is accommodated and that includes a base surface (408a) bearing against the base surface (508a) of the male fittings (154) and for each lateral surface (508b-d) of the male element (504) a lateral surface (408b-d) faces said lateral surface (508b-d) of the male element (504),
- for each lateral surface (508b-d) of the male element (504) a bearing system (406) that is fastened to the lateral surface (408b-d) of the receptacle (404) corresponding to the lateral surface (508b-d) of the male element (504), where the bearing system (406) includes a bearing surface (702) and an adjustment system (900) adapted to move said bearing surface (702) and to immobilise it in position, and
- a bolt (510) that includes an externally threaded shank and a nut fastened to the female fitting (152), where each base surface (408a, 508a) includes a bore (412, 512) for the passage of the externally threaded shank and where the bolt (510) sandwiches the two base surfaces (408a, 508a).

2. Aircraft (100) according to claim 1, **characterised in that** the receptacle (404) is open toward the exterior of the aircraft (100).

3. Aircraft (100) according to either one of claims 1 or 2, **characterised in that** the opening (124) is delimited by longerons (122) of the fuselage (102) and **in that** each longeron (122) of the fuselage (102) is fixed between the ends of the beams (110a-b) of the fuselage (102) and the shoes (402) of the female fittings (152).

4. Aircraft (100) according to any one of claims 1 to 3, **characterised in that** the removable panel (104) is delimited by longerons (132) and **in that** each longeron (132) of the removable panel (104) is fixed between the ends of the beams (120a-b) of the removable panel (104) and the shoes (502) of the male fittings (154).

5. Aircraft (100) according to claim 1, **characterised in that** it includes cover strips (126) removably fixed along the edges of the opening (124) outside the fixing means (150).

6. Aircraft (100) according to any one of claims 1 to 5, **characterised in that** the adjustment system (900) includes:
- a screw (902) the externally threaded shank of which is screwed into the female fitting (152) and the head of which carries the bearing surface (702) and where the periphery of the head of the screw (902) includes an imprint (906),
- an immobilising plate (904) mobile in translation parallel to a translation direction, where the immobilising plate (904) comprises a first flat (910a) with a hollow counter-imprint (908) that receives the head and the imprint (906) and that cooperates with said imprint (906) to immobilise the screw (902) in rotation and a second flat (910b) with two oblong holes (912) the axes of which are parallel to the translation direction, and
- for each oblong hole (912) a clamping screw (914) that is screwed into the female fitting (152), sandwiching the second flat (910b).

7. Aircraft (100) according to claim 6, **characterised in that** the adjustment system (900) includes shims (916) between the head of the screw (902) and the lateral surface (408c).

8. Method of assembling a removable panel (104) onto a fuselage (102) of an aircraft (100) according to claim 1, the method including:
- an offering up step during which the removable panel (104) equipped with the male fittings (154) is offered up to the fuselage (102) equipped with the female fittings (152),
- a pre-fixing step during which, for each pair comprising a male fitting (154) and a female fitting (152), the bolt (510) is screwed in but not tightened in order to provide a slack fixing,
- a bearing step during which, for each bearing surface (702), the corresponding adjustment system (900) is actuated to place said bearing surface (702) against the corresponding lateral surface (508b-d) of the male element (504) and to immobilise said bearing surface (702) in this position, and
- a tightening step during which each bolt (510) is tightened down.
